Europäisches Patentamt

(19) European Patent Office

Office européen des brevets

(11) Numéro de publication : **0 210 919**
**B1**

(12) **FASCICULE DE BREVET EUROPÉEN**

(45) Date de publication du fascicule du brevet :
02.11.89

(51) Int. Cl.⁴ : **H 02 N   1/12**

(21) Numéro de dépôt : 86401629.0

(22) Date de dépôt : 21.07.86

(54) Dispositif de transport de charges électrostatiques, en particulier pour générateur électrostatique à trés haute tension.

(30) Priorité : 31.07.85 FR 8511731

(43) Date de publication de la demande :
04.02.87 Bulletin 87/06

(45) Mention de la délivrance du brevet :
02.11.89 Bulletin 89/44

(84) Etats contractants désignés :
CH DE GB IT LI NL SE

(56) Documents cités :
FR--A--   953 790
FR--A-- 2 061 569
IEEE TRANSACTIONS ON NUCLEAR SCIENCE, vol.
NS-30, no. 4, part 1, août 1983, pages 2713-2715, IEEE,
New York, US; M. LETOURNEL et al.: "A 35-MV
tandem van de graaff - The vivitron"
IEEE TRANSACTIONS ON NUCLEAR SCIENCE, juin
1967, pages 113-116, New York, US; J.G. TRUMP:
"New developments in high voltage technology"

(73) Titulaire : CENTRE NATIONAL DE LA RECHERCHE
SCIENTIFIQUE (CNRS)
15, Quai Anatole France
F-75007 Paris (FR)

(72) Inventeur : Letournel, Michel
15, rue de Dingsheim
F-67200 Strasbourg Cronenbourg (FR)
Inventeur : Heileboid, Jean-Marie
15, rue Mozart
F-67450 Mundolsheim (FR)
Inventeur : Teissier, Claude
32, rue de Lorraine
F-67380 Lingolsheim (FR)

(74) Mandataire : Netter, André et al
Cabinet NETTER 40, rue Vignon
F-75009 Paris (FR)

**Description**

L'invention concerne le transport de charges électrostatiques par des moyens mécaniques.

On sait obtenir de très hautes tensions par des générateurs électrostatiques. Pour les faire fonctionner, il faut leur incorporer un dispositif de transport de charges électrostatiques entre une zone de basse tension ou de masse du générateur et sa zone de haute tension. C'est ce que l'on appelle le dispositif d'alimentation du générateur électrostatique.

Les dispositifs d'alimentation des générateurs électrostatiques actuels sont de deux types :

système à cylindre isolant de type Félici, qui donne de forts débits ou (courants) de charges électrostatiques, sans toutefois pouvoir atteindre de très hautes tensions ;

système à courroie plate isolante du type Van de Graaff, qui peut fonctionner sous très haute tension, mais ne donne que des débits ou courants de charges limités.

Le second système est utilisé pour l'alimentation des accélérateurs électrostatiques, qui servent essentiellement à des applications de recherche en physique nucléaires. Par contre, pour d'autres applications, venues plus récemment, il est souhaitable de disposer d'un débit ou courant de charges élevé, tout en atteignant néanmoins une très haute tension. Ce problème n'a pas reçu de solution satisfaisante à l'heure actuelle pour les générateurs Van de Graaff.

En effet, dans ces accélérateurs électrostatiques, le contrôle de la distribution du champ électrique entre la zone de très haute tension et la zone de basse tension ou de masse se fait à l'aide de dispositifs discrets, tels que des barres de gradient. Comme le reste de l'accélérateur, le dispositif d'alimentation est mis sous atmosphère gazeuse, en principe d'hexafluorure de soufre. Ces barres de gradient sont placées de part et d'autre de chaque brin, montant et descendant, de la courroie (voir le document FR-A-953 790). Mais la position d'équilibre de chaque brin de la courroie entre les barres de gradient qui l'entourent est instable : lorsqu'on souhaite augmenter la densité de charges électriques, ou plus exactement le bilan net de charges électriques que transporte chaque brin de la courroie, il apparaît des instabilités mécaniques de la courroie, qui sont source de phénomènes perturbateurs : vibrations, usure prématurée, voire claquages.

La présente invention vient apporter une solution au problème d'augmentation du débit de charge.

Le dispositif de transport de charges électrostatiques proposé est du type comprenant, sous atmosphère gazeuse :

une courroie plate isolante qui tourne en circuit fermé entre une zone de masse et une zone de haute tension, espacées l'une de l'autre,

des moyens propres à déposer des charges électriques sur la courroie dans la zone située à la masse,

des moyens propres à extraire des charges électriques de la courroie dans la zone de haute tension, et

deux structures disposées près de chacun des brins de la courroie, entre les deux zones de haute tension et de masse, afin de contrôler le gradient de champ électrique le long de la courroie entre ces mêmes zones.

L'invention est caractérisée en ce que chacune des structures disposées près de chacun des brins de la courroie s'étend en continu tout le long du brin concerné, tout en étant non conductrice selon la direction de défilement de la courroie ; cette structure comprend, du côté de la courroie, une surface plane, où elle est agencée pour engendrer un coussin du gaz ambiant entre elle-même et la courroie.

En pratique, la distance entre la courroie et ladite surface plane est inférieure au millimètre.

Selon un autre aspect de l'invention, chacune des structures est principalement constituée d'une résine époxy, munie côté courroie d'orifices à peu près régulièrement espacés, et alimentée en gaz ambiant, pour obtenir une pression sensiblement uniforme en sortie des orifices. Ceci permet la réalisation du coussin d'air précité.

Avantageusement, la distance moyenne entre orifices adjacents est de quelques centimètres, le diamètre de ces orifices étant de l'ordre du millimètre.

Dans un premier mode de réalisation de l'invention, la structure contient des pièces conductrices longilignes, disposées perpendiculairement à la direction de défilement, régulièrement espacées selon celle-ci, et parallèles au plan de la courroie.

Ces pièces conductrices peuvent affleurer à la surface de la structure isolante, en regard de la courroie.

Dans une variante, les pièces conductrices sont noyées à une profondeur choisie dans le volume de la structure isolante.

Il est avantageux que les tubulures alimentant les orifices passent, au moins en partie, à l'intérieur desdites pièces conductrices.

De préférence les pièces conductrices ont, en section droite, un profil choisi pour minimiser les distorsions du champ électrique local, au voisinage de la courroie, créées par leur présence.

Dans un autre mode de réalisation de l'invention, ladite structure est constituée d'un matériau isolant, homogène, mais rendu faiblement conducteur en volume.

Il est alors avantageux que les tubulures alimentant les orifices soient, à l'intérieur de la structure, inclinées par rapport à la direction de défilement de la courroie. Il est également avantageux de faire de même pour la partie des tubulures qui traversent le matériau isolant, dans le mode de réalisation précédent.

Selon un autre aspect de l'invention, la permittivité diélectrique de la résine époxy est comprise entre 5 et 8, environ.

Les deux structures sont disposées, de préférence, du côté extérieur des deux brins de la courroie, respectivement.

Enfin, l'invention s'applique notamment lorsque le gaz ambiant est de l'hexafluorure de soufre.

D'autres avantages de l'invention apparaîtront à l'examen de la description détaillée ci-après, et des dessins annexés, sur lesquels :

la figure 1 est un schéma de principe très simplifié d'un générateur électrostatique et de son dispositif d'alimentation par courroie ;

la figure 2 est une vue partielle en coupe schématisant un premier mode de réalisation de l'invention ;

les figures 2A et 2B sont une vue partielle en coupe (ligne A-A de la figure 2) et une vue partielle en perspective montrant comment l'on peut établir le coussin de gaz ;

la figure 3 est une vue partielle en coupe schématisant un second mode de réalisation de l'invention ; et

la figure 4 est une vue partielle en coupe schématisant un troisième mode de réalisation de l'invention.

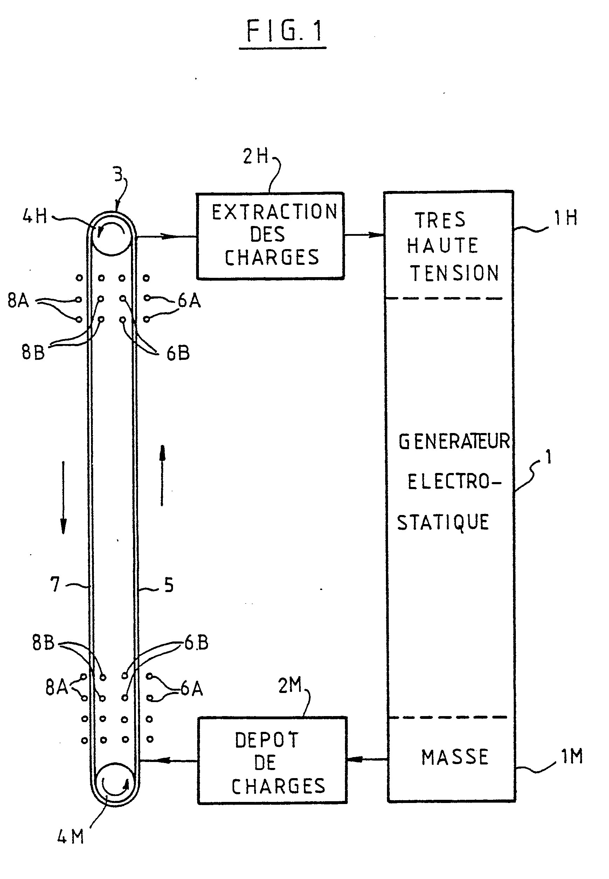

La figure 1 fait apparaître un générateur électrostatique 1, muni d'une partie à la masse 1M et d'une partie sous très haute tension 1H, à son autre extrémité. Le générateur peut être implanté verticalement ou horizontalement. La structure interne du générateur électrostatique 1, non représenté, peut être par exemple celle décrite dans la Demande de brevet français publiée sous le N° 2 498 040.

Pour obtenir une haute tension, il est nécessaire de faire passer des charges électriques depuis la zone de masse 1M du générateur jusqu'à sa zone de très haute tension 1H.

Lorsqu'il s'agit de très hautes tensions, on utilise essentiellement un transport mécanique des charges électriques par une courroie, désignée ici dans son ensemble par 3. Cette courroie 3, qui est normalement plate et isolante, s'enroule en circuit fermé entre des galets 4M, en bas, et 4H en haut.

Un dispositif 2M, placé entre la zone de masse, 1M du générateur et la partie basse de la courroie assure le dépôt de charges électriques sur l'un des brins de celle-ci. En partie haute, un autre dispositif 2H extrait des charges électriques de la courroie pour les transférer dans la partie à très haute tension 1H du générateur.

Il existe alors entre la partie haute et la partie basse de la courroie sensiblement le même champ électrique qu'entre la zone de très haute tension 1H du générateur et sa zone de masse 1M. L'ensemble des moyens qui viennent d'être décrits baigne dans une atmosphère d'un gaz, tel que l'hexafluorure de soufre, possédant de bonnes caractéristiques disruptives.

Dans le but de contrôler l'échelonnement du champ électrique le long de la courroie, il est connu d'utiliser des dispositifs que l'on appelle barres de gradient.

La figure 1 fait apparaître des barres de gradient 6A et 6B de part et d'autre du brin montant 5 de la courroie qui assure le transfert de charges entre l'organe 2M et l'organe 2H. Des barres de gradient similaires 8A et 8B existent de part et d'autre du brin descendant 7 de la courroie 3.

Cette disposition a pu donner satisfaction jusqu'à présent dans les accélérateurs électrostatiques, où il n'est généralement pas nécessaire de transmettre un fort débit de charges, c'est-à-dire un fort courant électrique, entre la zone de masse 1M et la zone de très haute tension 1H de l'accélérateur. Il est cependant rappelé que la courroie d'alimentation est souvent l'une des sources de claquage d'un accélérateur électrostatique.

On remarque en effet que chaque brin de la courroie circule entre des barres de gradient situées de part et d'autre. Si l'on admet que la charge globale de ce brin de la courroie est positive, ces charges vont donc créer des lignes de champ qui se referment soit à droite soit à gauche vers les barres de gradient. Lorsque la courroie est exactement à égale distance entre les barres de droite et les barres de gauche (supposées de structure symétrique), le champ électrique est identique à droite et à gauche. On a donc une position d'équilibre. Cependant, comme tout dispositif mécanique, la courroie est sujette à des petits déplacements autour de sa position centrale. Or, dès qu'un déplacement du brin de la courroie l'amène à se décaler de cette position centrale, pour se rapprocher des barres de gradient situées d'un côté, il apparaît une instabilité car le champ électrique tend alors à augmenter l'écart que prend la courroie par rapport à sa position centrale.

On observe ainsi que la courroie a tendance à se plaquer soit à droite soit à gauche sur les barres de gradient. Elle frotte sur ces barres d'autant plus qu'il y a plus de charges transportées par la courroie. L'homme de l'art sait qu'il en résulte des difficultés de toutes sortes, dont la moindre n'est pas l'usure de la courroie par frottement sur les barres de gradient.

Ces phénomènes font que le transport de charges par courroie a été jusqu'à présent considéré comme très difficilement applicable en régime de fort débit, alors que l'utilisation d'une courroie est un point de passage obligé dès que l'on veut accéder à de très hautes tensions.

Au lieu de barres de gradient disposées de part et d'autre de chaque brin de la courroie, l'invention prévoit que, sur un côté de chacun de ces brins, on dispose une structure continue, non conductrice selon la direction de la courroie ; de plus, cette structure offre, du côté de la courroie une surface plane où elle est agencée pour engendrer un coussin du gaz ambiant, tel que l'hexafluorure de soufre, entre elle-même et la courroie.

L'utilisation d'un élément linéaire tel que la courroie préserve la possibilité d'obtenir une très haute tension. A côté de cela, la courroie est maintenue à distance réduite de ladite surface de la structure continue, ce qui permet le transport d'une densité de charges d'autant plus élevée que l'épaisseur du film de gaz est mince, selon la loi de disruption du gaz considéré.

De plus, la composition et la forme de la structure sont déterminées de façon à minimiser les distorsions du champ électrique local au voisinage de la courroie, telles qu'elles peuvent résulter de la géométrie de la structure, ce qui permet d'obtenir une loi de disruption d'autant plus favorable que les distorsions seront plus faibles.

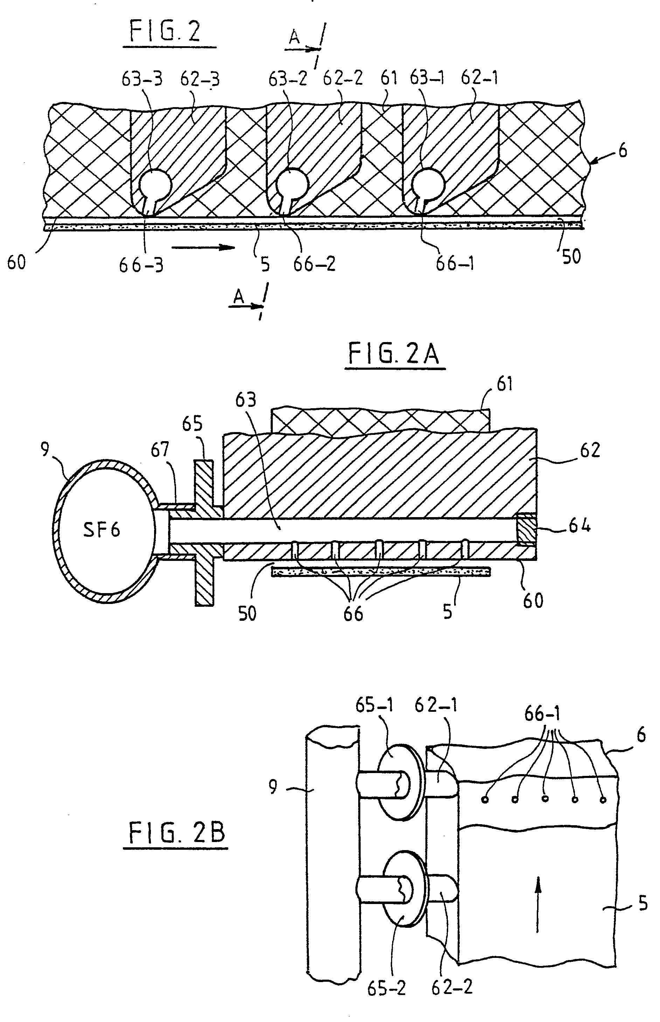

Trois modes de réalisation de l'invention sont illustrés respectivement sur les figures 2 à 4. Il s'agit d'une représentation partielle d'un brin de la courroie et de la structure qui lui fait face d'un côté, en principe du côté extérieur.

Le brin représenté est le brin ascendant 5, et l'on suppose qu'il transporte une densité de charges positives. Le potentiel est donc croissant de la gauche vers la droite.

Sur la figure 2, la structure 6 placée en regard du brin 5 offre une surface plane 60 au voisinage immédiat du brin. La distance entre la courroie et cette surface plane 60 est de l'ordre du millimètre ou de quelques millimètres.

La structure 6 est constituée d'une résine époxy dont la permittivité diélectrique est de préférence comprise entre 5 et 8, environ. Elle loge des barres conductrices 62-1, 62-2, 62-3, noyées dans la matrice d'époxy 61, transversalement à la direction de défilement de la courroie 5. Ces barres 62 débordent la matrice 61, de part et d'autre (Fig. 2A et 2B). Leur grande dimension s'étend parallèlement à la surface 60.

Des tubes distributeurs de gaz 63-1 à 63-3 parcourent transversalement la structure 6, en passant de préférence dans les barres conductrices 62-1 à 62-3, selon leur grande dimension. Chaque tube 63 distribue le gaz à des tubulures latérales 66 aboutissant à la surface 60, par des orifices dont le diamètre est de l'ordre du millimètre, tandis que la distance moyenne entre orifices adjacents peut être de quelques centimètres. Bien entendu, la répartition des orifices sur la surface 60 n'a pas besoin d'être rigoureusement régulière, puisqu'une distribution statistiquement équilibrée de ces orifices peut suffire à l'établissement d'un coussin de gaz.

Les tubes tels que 63-1 à 63-3 sont soumis à une surpression du gaz ambiant, ce qui permet l'établissement du coussin de gaz 50 dans l'intervalle compris entre la surface 60 et la face supérieure du brin de courroie 5.

Une façon d'obtenir le coussin de gaz est illustrée sur les figures 2A et 2B, qui complètent à cet égard la figure 2.

Chaque tube 63 est fermé à une extrémité, par exemple par un bouchon 64. A son autre extrémité se visse un disque 65, alésé axialement pour faire communiquer le tube 63, en 67 avec un conduit 9 (par exemple en Rilsan — marque déposée) qui amène ainsi du $SF_6$ sous pression aux différents tubes 63. Tubes 63 et disques 65 sont métalliques, par exemple en acier inoxydable.

Les disques 65 forment entre eux des éclateurs, dans la direction de défilement de la courroie 5, comme visible entre 65-1 et 65-2 (figure 2B). Le conduit 9 s'étend latéralement de la structure 6, dans la direction de défilement de la courroie 5.

Dans un exemple de réalisation (50 kV entre barres), les barres 62, de largeur 1 cm, sont échelonnées au pas de 2,5 cm, donc avec 1,5 cm entre barres. Les éclateurs 65 sont des disques d'épaisseur 6 mm pour un diamètre extérieur de 22 mm sur leur périphérie arrondie (les figures ne sont pas à cette échelle, pour des raisons de clarté).

La disposition selon l'invention permet d'avoir une distance très faible, dans le gaz, entre la courroie diélectrique 5 et la structure 6 selon l'invention. Cela est avantageux car plus la distance est faible, mieux on évite l'apparition de champs disruptifs dans cet intervalle diélectrique gazeux.

De plus, lorsque la charge transportée par le brin de courroie 5 tend à augmenter, il en résulte comme précédemment exposé une force attractive entre ce brin 5 et la structure 6 qui est en regard. Mais, comme le coussin de gaz dans l'intervalle 50 va voir sa pression augmenter si l'épaisseur de cet intervalle se réduit, il apparaît une force répulsive qui tend à compenser l'effet d'attraction entre la courroie 5 et la structure 6. En conséquence, et contrairement à ce que permettait la technique antérieure, on peut maintenant obtenir une position d'équilibre stable du brin de courroie 5 par rapport à la surface 60 de la structure 6, avec un très faible intervalle entre ces deux organes.

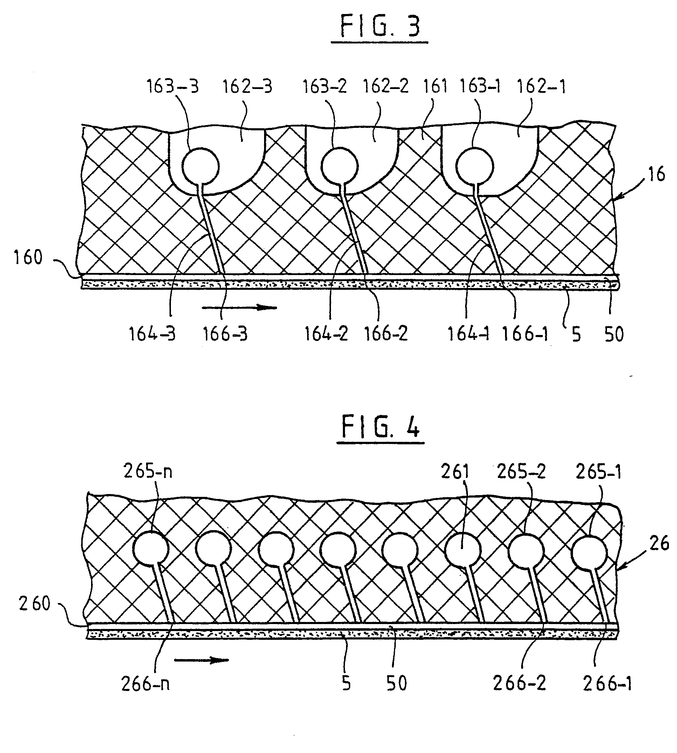

La figure 3 illustre un second mode de réalisation de l'invention, où l'on retrouve le brin de courroie 5 et l'intervalle 50.

La structure en regard, maintenant notée 16, offre une surface 160 du côté du brin 5. Les barres 162-1 à 162-3 sont toujours noyées dans la résine diélectrique 161, mais à distance de la surface 160 à l'intérieur de la résine.

Les tubes distributeurs maintenant notés 163-1 à 163-3 traversent les barres conductrices 162. Le gaz part vers la surface 160 par des tubulures 164 qui sont de préférence inclinées, comme illustré.

En effet l'inclinaison des tubulures dans la résine permet un meilleur comportement de l'ensemble du dispositif, en ce qui concerne l'établissement des lignes de force (de champ électrique) entre le brin de courroie 5 et les pièces conductrices 162. Pour le reste, le coussin d'air peut être obtenu comme dans le premier mode de réalisation (Fig. 2A et 2B).

Dans les deux modes de réalisation qui viennent d'être décrits, les structures 6 et 16 sont hétérogènes. Il peut en résulter des distorsions de champ électrique au niveau de l'intervalle 50 entre la structure et le brin de courroie 5.

Il s'avère possible de choisir la forme des barres 62 ou 162, du côté où elles s'approchent du brin de courroie, de manière à minimiser ces distorsions du champ électrique. Ceci contribue aussi à améliorer la loi de disruption dans l'intervalle 50.

A cet égard, notamment en ce qu'ils illustrent des formes, les dessins annexés sont incorporés à la description non seulement pour permettre de mieux comprendre l'invention, mais aussi pour contribuer le cas échéant à la définition de celle-ci.

L'examen de la figure 2 montre que le profil des pièces 62 est arrondi du côté amont par rapport à la courroie, jusqu'à venir au contact de la surface 60. Ensuite, ce profil s'écarte progressivement de la surface 60.

Pour le reste, la forme des pièces 62 est prismatique, en s'appuyant sur le contour illustré sur la figure 2. A l'opposé de la courroie, ces pièces peuvent avoir un contour semblable à celui couramment utilisé pour les barres de gradient.

Sur la figure 3, l'extrémité des pièces 162 côté courroie rappelle celle des pièces 62 de la figure 2, mais avec des formes plus arrondies. Ceci est rendu possible par le fait que la distance entre les pièces 162 et la surface 160 étant assez importante, les distorsions de champ électrique induites, du fait de l'existence de ces pièces, dans l'intervalle 50 sont moins marquées.

La figure 4 fait apparaître un autre mode de réalisation de l'invention, dans lequel la structure, maintenant notée 26, est homogène, du moins de façon macroscopique.

En effet, cette structure est constituée d'une résine époxy 261 qui est isolante, mais rendue partiellement conductrice en volume, par une charge appropriée de la résine époxy, ce qui est classique.

Il est bien entendu nécessaire que cette charge conductrice de la résine 261 ne produise pas une conductivité trop importante de la structure 26 dans le sens de défilement de la courroie 5.

Dans la structure 26 sont ménagés comme précédemment des tubes distributeurs 265-1 à 265-n, alimentant des tubulures 266-1 à 266-n qui aboutissent sur la surface 260 en regard de la courroie 5, pour former un coussin de gaz dans l'intervalle 50. Là encore, il est préférable de disposer les tubulures 266 de façon inclinée sur le sens de défilement de la courroie 5, pour éviter des difficultés liées à l'existence de tubes gazeux prolongeant l'intervalle 50 à l'intérieur de la structure 26.

L'alimentation en gaz peut être réalisée comme illustré sur les figures 2A et 2B, mais sans les éclateurs métalliques. Une variante consiste à alimenter les tubes 265 par un caisson latéral, mis sous pression de SF6. Cette variante peut s'appliquer aux modes de réalisation précédents.

Le dispositif selon l'invention permet d'alimenter un générateur électrostatique afin de lui faire délivrer de forts débits ou courants électriques sous très haute tension.

En cela, l'invention est utilisable dans toutes les applications industrielles des générateurs électrostatiques, soit en tant que tels, soit comme constituants de systèmes plus complexes tels que les accélérateurs électrostatiques, et plus particulièrement pour les applications requérant de fortes puissances.

L'invention permet notamment d'augmenter le débit d'accélérateurs électrostatiques existants.

Elle permet aussi de construire des générateurs électrostatiques pour diverses applications, comme l'épuration des eaux.

Bien entendu, l'invention n'est pas limitée aux modes de réalisation décrits. On peut utiliser des moyens équivalents à ceux mentionnés plus haut. En particulier, l'expression « courroie plate isolante » n'exclut pas que la courroie contienne des inclusions conductrices, pourvu qu'elle reste globalement isolante, sur sa longueur.

## Revendications

1. Dispositif de transport de charges électrostatiques, en particulier pour générateur électrostatique à très haute tension, du type comprenant, sous atmosphère gazeuse :

    une courroie plate isolante (3) qui tourne en circuit fermé entre une zone de masse (1M) et une zone de très haute tension (1H), espacées l'une de l'autre ;

    des moyens (2M) propres à déposer des charges électriques sur la courroie dans la zone située à la masse ;

    des moyens (2H) propres à extraire des charges électriques de la courroie dans la zone de haute tension ; et

    deux structures (6, 8) disposées près de chacun des brins de la courroie, entre les deux zones, afin de contrôler le champ électrique le long de la courroie entre lesdites zones, caractérisé en ce que chacune de ces structures (6 ; 16 ; 26) s'étend en continu tout le long du brin concerné (5), tout en étant non conductrice selon la direction de défilement de la courroie, cette structure comprenant du côté de la courroie, une surface plane (60 ; 160 ; 260) où elle est agencée pour engendrer un coussin (50) du gaz ambiant entre elle-même et la courroie.

2. Dispositif selon la revendication 1, caractérisé en ce que la distance entre la courroie (5) et ladite surface plane (60 ; 160 ; 260) est de quelques millimètres.

3. Dispositif selon l'une des revendications 1 et 2, caractérisé en ce que chacune des structures (6 ; 16 ; 26) est principalement constituée d'une résine époxy, munie côté courroie d'orifices à peu près régulièrement espacés (66 ; 166 ; 266) et alimentés en gaz ambiant pour obtenir une pression sensiblement uniforme en sortie des orifices.

4. Dispositif selon la revendication 3, caractérisé en ce que la distance moyenne entre orifices adjacents (66 ; 166 ; 266) est de quelques centimètres, le diamètre de ces orifices étant de l'ordre du millimètre.

5. Dispositif selon l'une des revendications 3 et 4, caractérisé en ce que la structure contient des pièces conductrices longitudinales (62 ; 162) disposées perpendiculairement à la direction de défilement, régulièrement espacées selon celle-ci, et parallèles au plan de la courroie.

6. Dispositif selon la revendication 5, caractérisé en ce que les pièces conductrices (62) affleurent à la surface de la structure isolante, en regard de la courroie.

7. Dispositif selon la revendication 5, caractérisé en ce que les pièces conductrices (162) sont noyées à une profondeur choisie dans le volume de la structure isolante.

8. Dispositif selon l'une des revendications 5 à 7, caractérisé en ce que les tubulures (63 ; 163) alimentant les orifices passent à l'intérieur desdites pièces conductrices.

9. Dispositif selon l'une des revendications 5 à 8, caractérisé en ce que les pièces conductrices (62 ; 162) ont, en section droite, un profil choisi pour minimiser les distorsions du champ électrique local, au voisinage de la courroie, créées par leur présence.

10. Dispositif selon l'une des revendications 3 et 4, caractérisé en ce que la structure (26) est constituée d'un matériau isolant rendu faiblement conducteur en volume.

11. Dispositif selon la revendication 10, caractérisé en ce que les tubulures (164, 265) alimentant les orifices sont, à l'intérieur de la structure isolante, inclinées par rapport à la direction de défilement de la courroie.

12. Dispositif selon l'une des revendications 3 à 11, caractérisé en ce que la permittivité diélectrique de la résine époxy est comprise entre 5 et 8, environ.

13. Dispositif selon l'une des revendications précédentes, caractérisé en ce que les deux structures (6 ; 16 ; 26) sont disposées du côté extérieur des deux brins de la courroie, respectivement.

14. Dispositif selon l'une des revendications précédentes, caractérisé en ce que le gaz ambiant est de l'hexafluorure de soufre.

## Claims

1. Device for conveying electrostatic charges, in particular for a very high voltage electrostatic generator, of the type comprising, in a gaseous atmosphere :

a flat insulating belt (3) which revolves in a closed loop between an earth zone (1M) and a very high voltage zone (1H) spaced relative to one another ;

means (2M) suitable for depositing electrical charges on the belt in the zone situated at the earth ;

means (2H) suitable for extracting the electrical charges from the belt in the high-voltage zone ; and

two structures (6, 8) arranged close to each of the sections of the belts, between the two zones, in order to control the electrical field along the belt between the said zones, characterized in that each of these structures (6 ; 16 ; 26) extends continuously along the entire section concerned (5), while not being conductive in the direction of movement of the belt, this structure comprising on the side of the belt, a flat surface (60 ; 160 ; 260) where it is arranged to produce an ambient gas cushion (50) between itself and the belt.

2. Device according to claim 1, characterized in that the distance between the belt (5) and the said flat surface (60 ; 160 ; 260) is a few millimeters.

3. Device according to either one of claims 1 and 2, characterized in that each of the structures (6 ; 16 ; 26) consists mainly of an epoxy resin provided on the belt side with orifices (66 ; 166 ; 266) more or less regularly spaced and supplied with ambient gas in order to obtain a substantially uniform pressure at the outlet of the orifices.

4. Device according to claim 3, characterized in that the mean distance between adjacent orifices (66 ; 166 ; 266) is a few centimetres, the diameter of these orifices being of the order of one millimetre.

5. Device according to one of claims 3 and 4, characterized in that the structure contains longitudinal conducting components (62 ; 162) arranged perpendicularly to the direction of movement, regularly spaced along the latter and parallel to the plane of the belt.

6. Device according to claim 5, characterized in that the conducting components (62) emerge at the surface of the insulating structure, opposite the belt.

7. Device according to claim 5, characterized in that the conducting components (162) are embedded to a chosen depth in the volume of the insulating structure.

8. Device according to one of claims 5 to 7, characterized in that the nozzles (63 ; 163) supplying the orifices pass inside the said conducting components.

9. Device according to one of claims 5 to 8, characterized in that the conducting components (62 ; 162) have, in cross-section, a profile chosen to minimize the distorsions of the local electric field, in the vicinity of the belt, created by their presence.

10. Device according to either one of claims 3 and 4, characterized in that the structure (26) consists of an insulating material which is made weakly conductive in terms of its volume.

11. Device according to claim 10, characterized in that the nozzles (164, 265) supplying the orifices are, inside the insulating structure, inclined relative to the direction of movement of the belt.

12. Device according to one of claims 3 to 11, characterized in that the dielectric permittivity of the epoxy resin is comprised between 5 and 8, approximately.

13. Device according to one of the preceding claims, characterized in that the two structures (6 ; 16 ; 26) are arranged on the outer side of the two sections of the belt, respectively.

14. Device according to one of the preceding claims, characterized in that the ambient gas is sulphur hexafluoride.

## Patentansprüche

1. Vorrichtung für den elektrostatischen Ladungstransport, insbesondere für einen elektrostatischen Generator von sehr hoher Spannung, von einem Typus, der unter gasförmiger Atmosphäre enthält :

ein isoliertes Band (3), das in einer geschlossenen Schleife zwischen einer Massezone (1M) und einer Zone sehr hoher Spannung umläuft, von denen die eine von der anderen Abstand hält ;

Mittel (2M), die geeignet sind, elektrische Ladungen auf das Band in der bei der Masse gelegenen Zone aufzubringen ;

Mittel (2H), die geeignet sind, elektrische Ladungen von dem Band in der Zone hoher Spannung abzunehmen ; und

zwei Strukturen (6, 8), die in der Nähe jedes der Trume des Bandes zwischen den beiden Zonen angeordnet sind, um das elektrische Feld längs des Bandes zwischen den genannten Zonen zu kontrollieren,

dadurch gekennzeichnet, daß jede dieser Strukturen (6 ; 16 ; 26) sich durchgehend über die ganze Länge des betreffenden Trums (5) ausbreitet, das in Bandrichtung vollständig nichtleitend ist, wobei diese Struktur nach der Seite des Bandes hin eine ebene Oberfläche (60 ; 160 ; 260) enthält, wo sie angeordnet ist, um ein Kissen (50) des umgebenden Gases zwischen sich und dem Band zu erzeugen.

2. Vorrichtung nach Anspruch 1, dadurch gekennzeichnet, daß der Abstand zwischen dem Band (5) und der erwähnten ebenen Oberfläche (60 ; 160 ; 260) einige Millimeter beträgt.

3. Vorrichtung nach einem der Ansprüche 1 und 2, dadurch gekennzeichnet, daß jede der Strukturen (6 ; 16 ; 26) hauptsächlich aus einem Epoxyharz besteht und auf der Bandseite mit Löchern (66 ; 166 ; 266) versehen ist, die nahezu gleichmäßig Zwischenraum lassen und mit umgebendem Gas gespeist sind, um einen genau gleichmäßigen Druck am Ausgang der Löcher zu erreichen.

4. Vorrichtung nach Anspruch 3, dadurch gekennzeichnet, daß der mittlere Abstand zwischen angrenzenden Löchern (66 ; 166 ; 266) einige Zentimeter beträgt, während der Durchmesser dieser Löcher in der Größenordnung von Millimetern liegt.

5. Vorrichtung nach einem der Ansprüche 3 und 4, dadurch gekennzeichnet, daß die Struktur der Länge nach leitfähige Teile (62 ; 162) enthält, die rechtwinklig zur Bandrichtung angeordnet sind, zueinander gleichmäßig Zwischenraum lassen und parallel zur Ebene des Bandes verlaufen.

6. Vorrichtung nach Anspruch 5, dadurch gekennzeichnet, daß die leitfähigen Teile (62) an der Oberfläche der isolierenden Struktur des Bandes vorbeilaufen.

7. Vorrichtung nach Anspruch 5, dadurch gekennzeichnet, daß die leitfähigen Teile (162) in einer gewählten Tiefe in dem Volumen der isolierenden Struktur versenkt sind.

8. Vorrichtung nach einem der Ansprüche 5 bis 7, dadurch gekennzeichnet, daß die Rohransätze (63 ; 163), die die Löcher speisen, in das Innere der erwähnten leitfähigen Teile übergehen.

9. Vorrichtung nach einem der Ansprüche 5 bis 8, dadurch gekennzeichnet, daß die leitfähigen Teile (62 ; 162) im Querschnitt ein gewähltes Profil aufweisen, um die Verzerrungen des örtlichen elektrischen Feldes in der Nähe des Bandes zu minimieren, die durch seine Gegenwart entstehen.

10. Vorrichtung nach einem der Ansprüche 3 und 4, dadurch gekennzeichnet, daß die Struktur aus einem isolierenden Material gebildet ist, welches im Volumen als schwacher Leiter wirkt.

11. Vorrichtung nach Anspruch 10, dadurch gekennzeichnet, daß die Rohransätze (164, 265), die die Löcher speisen, im Inneren der isolierenden Struktur bezogen auf die Bandrichtung geneigt verlaufen.

12. Vorrichtung nach einem der Ansprüche 3 bis 11, dadurch gekennzeichnet, daß die dielektrische Permittivität des Epoxyharzes etwa zwischen 5 und 8 liegt.

13. Vorrichtung nach einem der vorhergehenden Ansprüche, dadurch gekennzeichnet, daß die beiden Strukturen (6 ; 16 ; 26) jeweils an der Außenseite der beiden Bandtrume angeordnet sind.

14. Vorrichtung nach einem der vorhergehenden Ansprüche, dadurch gekennzeichnet, daß das umgebende Gas Hexafluorschwefel ist.

# FIG.1

EXTRACTION
DES
CHARGES

2H

TRES
HAUTE
TENSION

1H

GENERATEUR

ELECTRO-

STATIQUE

1

MASSE

1M

DEPOT
DE
CHARGES

2M

3

4H

8A        6A

8B        6B

7        5

8B        6.B

8A        6A

4M

FIG. 2

FIG. 2A

FIG. 2B

## FIG. 3

163-3 162-3 163-2 162-2 161 163-1 162-1

16

160

164-3 166-3 164-2 166-2 164-1 166-1 5 50

## FIG. 4

265-n 261 265-2 265-1

26

260

266-n 5 50 266-2 266-1

3